# EUROPEAN PATENT APPLICATION

(11) **EP 3 017 859 A1**
(43) Date of publication of application: **11.05.2016**
(21) Application number: 15193865.1
(22) Date of filing: 10.11.2015
(51) Int. Cl.: B01D 53/86, B01D 53/94

(54) **EXHAUST GAS PURIFYING CATALYST FOR SELECTIVE REDUCTION OF NOX AND EXHAUST GAS PURIFYING METHOD**

(30) Priority: 10.11.2014 JP 2014228359
(71) Applicant: Toyota Jidosha Kabushiki Kaisha, Toyota-shi, Aichi-ken 471-8571 (JP)
(72) Inventor: MINAMI, Keiichi, TOYOTA-SHI, AICHI-KEN, 471-8571 (JP)
(74) Representative: Intès, Didier Gérard André

(57) **Abstract**

An object of the present invention is to provide an exhaust gas purifying catalyst for selective reduction of NOx, where the NOx adsorption capacity under low temperature, for example, at the time of engine starting, is improved and the selective catalytic reduction (SCR) activity is enhanced, and an exhaust gas purifying method using the catalyst.

The exhaust gas purifying catalyst for selective reduction of NOx of the present invention contains a spinel-type composite oxide phase represented by formula MnFe₂O₄.

## Description

### TECHNICAL FIELD

The present invention relates to an exhaust gas purifying catalyst for selective reduction of NOx and an exhaust gas purifying method. More specifically, the present invention relates to an exhaust gas purifying catalyst for selective reduction of NOx, where the NOx adsorption capacity under low temperature, for example, at the time of engine starting, is improved to enhance selective catalytic reduction (SCR) activity; and an exhaust gas purifying method using the catalyst.

### BACKGROUND ART

In recent years, purification of an exhaust gas discharged to the atmosphere is an important issue from an environmental aspect, and exhaust emission regulations have been tightened with the objective of preventing air pollution. An automobile, for example, a diesel automobile, is not exempt from exhaust emission regulations.

A diesel automobile is an automobile having a diesel engine as an internal combustion engine. In a diesel engine using light oil as the fuel, since the temperature is elevated to the ignition point of the light oil, a large amount of air is compressed and the light oil is combusted in a lean (excess oxygen) atmosphere, whereby high combustion efficiency is realized.

On the other hand, the diesel engine is characterized in that hydrocarbon (HC) and carbon monoxide (CO) are purified into H₂O and CO₂ with an excessive amount of oxygen but nitrogen oxide (NOx) and a particulate matter (PM) are likely to be produced and cannot be easily purified.

In order to purify NOx, PM, etc., an exhaust gas purifying catalyst for selective reduction is mounted on a diesel automobile. The exhaust gas purifying catalyst for selective reduction is a catalyst capable of selectively reducing NOx into N₂ even in a lean atmosphere by the combination use with ammonia.

However, the conventional exhaust gas purifying catalyst for selective reduction can hardly achieve sufficient selective catalytic reduction activity when the reaction temperature is low, for example, at the time of cold starting, and a large amount of NOx is sometimes discharged to the atmosphere. Solving this problem has been sought.

For example, in the low-temperature denitration catalyst of Patent Document 1, at least one metal oxide of Mn, Fe, Co and Ni is supported on an active carbon fiber, where NO is converted to NO₂ through adsorption and oxidation by the metal oxide and NO₂ reacts with NH₃ and is thereby decomposed into N₂ and H₂O. In this technique, reaction substances are condensed with each other in micropores of 2 nm or less of the active carbon fiber, and the decomposition reaction above is caused to proceed under a high-pressure environment in a micro region.

### RELATED ART

### Patent Document

[Patent Document 1] Japanese Unexamined Patent Publication No. 10-225641

### SUMMARY OF THE INVENTION

### Problems to be Solved by the Invention

However, in the low-temperature denitration catalyst of Patent Document 1, the NOx adsorption amount of the metal oxide itself is not large and in turn, the NOx purification performance is limited.

An object of the present invention is to provide an exhaust gas purifying catalyst for selective reduction of NOx, where the NOx adsorption capacity under low temperature, for example, at the time of engine starting, is improved and the selective catalytic reduction activity is enhanced, and an exhaust gas purifying method using the catalyst.

### Means to Solve the Problems

The present inventors have found that divalent manganese (Mn) has excellent NOx adsorption characteristics under low temperature, and accomplished the present invention. That is, the present invention is as follows.
<1> An exhaust gas purifying catalyst for selective reduction of NOx, containing a spinel-type composite oxide phase represented by formula MnFe₂O₄.
<2> An exhaust gas purifying method, including bringing an ammonia and an exhaust gas containing NOx into contact with the exhaust gas purifying catalyst according to item <1> above to selectively reduce and purify the NOx.

### Effects of the Invention

According to the present invention, an exhaust gas purifying catalyst for selective reduction of NOx, where the NOx adsorption capacity under low temperature, for example, at the time of engine starting, is improved and the selective catalytic reduction activity is enhanced, and an exhaust gas purifying method using the catalyst, can be provided.

### Brief Description of the Drawings

[Fig. 1] Fig. 1 is a view illustrating X-ray diffraction patterns when the molar ratio of Mn:Fe in the composite oxide is changed.
[Fig. 2] Fig. 2 is a view showing the relationship between the molar ratio of Mn:Fe in the composite oxide and the NOx purification ratio (%) at 150°C.

### Description of the Embodiments

The embodiment of the present invention is described in detail below. However, the present invention is not limited to the following embodiment and can be implemented by making various modifications within the scope of the present invention.

The rich, stoichiometric and lean atmospheres as used in the present invention means atmospheres where the air-fuel ratio is less than the theoretical air-fuel ratio, is the theoretical air-fuel ratio, and is more than the theoretical air-fuel ratio, respectively.

Furthermore, in the present invention, the air-fuel mixture means a gas where air and vaporized fuel are mixed; the air-fuel ratio means a dimensionless value obtained by dividing the mass of air by the mass of vaporized fuel in the air-fuel mixture; and the theoretical air-fuel ratio means an air-fuel ratio when air and vaporized fuel are reacted without excess or deficiency.

### <<Exhaust Gas Purifying Catalyst for Selective Reduction of NOx>>

The exhaust gas purifying catalyst for selective reduction of NOx of the present invention contains a spinel-type composite oxide phase represented by formula MnFe₂O₄.

It can be confirmed by an X-ray diffraction pattern having peaks at 35.0±0.5°, 30.1±0.5° and 43.0±0.5° that the exhaust gas purifying catalyst for selective reduction of NOx of the present invention contains a spinel-type composite oxide phase represented by formula MnFe₂O₄.

Although not limited in theory, the reason why the exhaust gas purifying catalyst for selective reduction of NOx of the present invention succeeds in improving the NOx adsorption capacity under low temperature, for example, at the time of engine starting, and enhancing the selective catalytic reduction (SCR) activity is described below.

The spinel structure represented by formula MnFe₂O₄ can hold active divalent Mn in its structure. This is thought to be due to the ionic radius of divalent Mn being larger than the ionic radius of trivalent Fe ion, and therefore divalent Mn and trivalent Fe enter the A site and the B site, respectively, of an energetically advantageous spinel structure (AB₂O₄) and are stabilized in this state.

In addition, the active divalent Mn has an excellent effect as the NOx adsorption site under low temperature and can efficiently adsorb a lot of NOx. Accordingly, the spinel structure represented by formula MnFe₂O₄ can efficiently adsorb a lot of NOx by virtue of holding active divalent Mn.

A so-called L-H mechanism (Langmuir-Hinshelwood mechanism) reaction becomes dominant under low temperature. The L-H mechanism is a mechanism where different chemical species adsorbed to the catalyst surface come close to each other and react there.

In this way, since the spinel structure represented by formula MnFe₂O₄ efficiently adsorbs a lot of NOx under low temperature and reduces the adsorbed NOx by the L-H mechanism above, it is considered that the selective catalytic reduction activity can be enhanced.

The MnFe₂O₄ of the exhaust gas purifying catalyst for selective reduction of NOx of the present invention need not be a spinel structure in its entirety, and may be sufficient if a spinel-type composite oxide phase of MnFe₂O₄ is formed at least in part of the composite oxide.

Accordingly, from the standpoint of facilitating the formation of a spinel-type composite oxide phase represented by MnFe₂O₄, the molar ratio of Mn and Fe in the exhaust gas purifying catalyst of the present invention is, for example, preferably from 0.2:0.8 to 0.7:0.3, more preferably from 0.3:0.7 to 0.6:0.4, still more preferably from 0.4:0.6 to 0.5:0.5.

### <<Production Method of Exhaust Gas Purifying Catalyst for Selective Reduction of NOx>>

The production method of the exhaust gas purifying catalyst for selective reduction of NOx of the present invention may be any method as long as a spinel-type composite oxide phase represented by formula MnFe₂O₄ can be formed, and the production method includes, for example, a complex polymerization method, a coprecipitation method, and an alkoxide method. Among these, a complex polymerization method, in particular a citric acid complex polymerization method is more preferred.

The complex polymerization method is, for example, a method including the following steps:
(1) a solution preparation step of dissolving a salt of manganese, a salt of iron, and a polydentate ligand such as citric acid, in a solvent to prepare a mixed salt solution;
(2) a complex forming step of desiccating the mixed salt solution to form a complex containing a salt of manganese, a salt of iron and a polydentate ligand; and
(3) a firing step of drying and firing the complex to form a composite oxide.

The salt of manganese and the salt of iron include, for example, an inorganic salt such as sulfate, nitrate, chloride and phosphate; an organic acid salt such as acetate and oxalate; and a combination thereof. Among these, an acetate and a nitrate are preferred.

The sulfate includes, for example, manganese(II) sulfate and iron(III) sulfate; the nitrite includes, for example, manganese(II) nitrate and iron(III) nitrate; the chloride includes, for example, manganese(II) chloride and iron(III) chloride; and the phosphate includes, for example, manganese phosphate and iron phosphate.

The acetate includes, for example, manganese(II) acetate and iron(III) acetate; and the oxalate includes manganese(II) oxalate, iron(III) oxalate, etc.

Furthermore, these manganese salt and iron salt may form a hydrate and may form, for example, manganese acetate tetrahydrate or iron nitrate nonahydrate.

The polydentate ligand includes, for example, polyvalent carboxylic acids such as citric acid and oxalic acid; diols such as glycol and pinacol; diamines such as ethylenediamine; and esters having two carbonyl groups, such as ethyl acetoacetate. The polydentate ligand is a molecule having two or more coordination atoms coordinated to a metal.

Specifically, for example, citric acid, oxalic acid, succinic acid, maleic acid, malic acid, adipic acid, tartaric acid, malonic acid, fumaric acid, aconitic acid, glutaric acid, ethylenediaminetetraacetic acid, lactic acid, glycolic acid, glyceric acid, salicylic acid, mevalonic acid, ethylenediamine, ethyl acetoacetate, malonic acid ester, glycol, and pinacol are preferred as the polydentate ligand.

Among these, because of a carboxylic acid having a hydroxy group, citric acid, lactic acid, malic acid, tartaric acid, glycol acid, salicylic acid, etc. are more preferred, and citric acid is still more preferred. One of these polydentate ligands may be used alone, or two or more thereof may be mixed and used.

The molar ratio among manganese salt, iron salt and polydentate ligand may be an any molar ratio as long as a spinel-type composite oxide phase can be formed at least in part of MnFe₂O₄.

The molar ratio of manganese salt:iron salt is, for example, preferably from 0.2:0.8 to 0.7:0.3, more preferably from 0.3:0.7 to 0.6:0.4, still more preferably from 0.4:0.6 to 0.5:0.5.

The molar ratio of manganese salt/iron salt:polydentate ligand is, for example, preferably from 1:1 to 1:10, more preferably from 1:1 to 1:5, still more preferably from 1:1 to 1:3.

The solvent may be an any solvent as long as it can dissolve the manganese salt, the iron salt and the polydentate ligand. The solvent includes, for example, a polar solvent such as distilled water, ion-exchanged water and pure water.

The desiccation temperature and desiccation time can be freely selected but are, for example, preferably from 60 to 120°C and from 4 to 24 hours.

The drying temperature and drying time can be freely selected but are, for example, preferably from 60 to 150°C and from 12 to 24 hours.

The firing temperature and firing time can be freely selected but are, for example, preferably from 300 to 600°C and from 1 to 24 hours. The firing temperature is more preferably from 400 to 500°C.

### «Exhaust Gas Purifying Method»

The method of the present invention for purifying an exhaust gas includes bringing an ammonia (NH₃) and an exhaust gas containing NOx into contact with the above-described exhaust gas purifying catalyst for selective reduction of NOx of the present invention to selectively reduce and purify NOx.

As the method for bringing an ammonia and an exhaust gas containing NOx into contact with the exhaust gas purifying catalyst for selective reduction of NOx of the present invention, an optional method can be employed. As such a method, a method of spraying ammonia, aqueous ammonia, etc., on an exhaust gas generated, for example, by a gasoline engine, a diesel engine or a lean burn engine, and then brining these into contact with the exhaust gas purifying catalyst for selective reduction of NOx of the present invention may be employed.

The method of the present invention is preferably applied to an internal combustion engine operating in a lean atmosphere, particularly, to a diesel engine. Because, in the lean atmosphere, HC and CO are easily oxidized and purified, while NOx is not easily reduced and purified.

Furthermore, the method of the present invention is preferably applied to an exhaust gas at the time of cold starting and/or under low temperature. Because, the exhaust gas purifying catalyst for selective reduction of NOx of the present invention can improve the NOx adsorption capacity under low temperature, for example, at the time of engine starting, and enhance the selective catalytic reduction activity.

The present invention is described in greater detail below by referring to Examples, but the scope of the present invention is of course not limited by these Examples.

### Examples

### «Example 1»

### <Production of Composite Oxide>

In Example 1, a composite oxide was produced by employing a citric acid complex polymerization method. The production process is specifically as follows.

0.04 mol (9.80 g) of manganese acetate tetrahydrate as a manganese salt and 0.16 mol (64.64 g) of iron nitrate nonahydrate as an iron salt were dissolved in 18 mol (324.00 g) of distilled water as a solvent by using a magnetic stirrer to obtain a mixture. Thereafter, 0.20 mol (38.43 g) of anhydrous citric acid was added to the mixture, thereby obtaining a solution working out to a precursor of a composite oxide.

Incidentally, the anhydrous citric acid was added to prepare the solution so that the number of moles of anhydrous citric acid is the same as the total number of moles of manganese acetate tetrahydrate and iron nitrate nonahydrate.

Thereafter, the solution was desiccated at 100°C over 6 hours to evaporate the water and obtain a solid. The solid was dried at 120°C over 12 hours and further fired at 500°C over 10 hours to obtain a powdered composite oxide. In addition, a pellet-shaped composite oxide was obtained by pressing the powder at a press pressure of 1 ton.

### «Examples 2 and 3 and Comparative Examples 1 and 2»

Pellet-shaped composite oxides were obtained in the same manner as in Example 1 with the exception that the amount used of each of manganese acetate tetrahydrate as a manganese salt and iron nitrate nonahydrate as an iron salt was changed as shown in Table 1 below.

**[Table 1]**

| Table 1: Relationship of Number of Moles Between Mn and Fe | | | |
|---|---|---|---|
| | Mn (mol) | Fe (mol) | Mn:Fe (molar ratio) |
| Example 1 | 0.04 | 0.16 | 0.2:0.8 |
| Example 2 | 0.08 | 0.12 | 0.4:0.6 |
| Example 3 | 0.10 | 0.10 | 0.5:0.5 |
| Comparative Example 1 | 0.16 | 0.04 | 0.8:0.2 |
| Comparative Example 2 | 0.20 | 0.00 | 1.0:0.0 |

### <XRD Measurement>

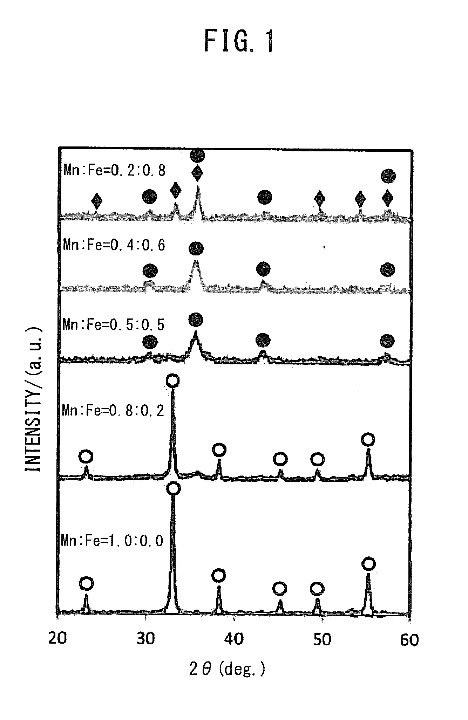

Fig. 1 shows the results when XRD measurement was performed on the composite oxides of Examples 1 to 3 and Comparative Examples 1 and 2. Fig. 1 is a view illustrating X-ray diffraction patterns when the molar ratio of Mn:Fe in the composite oxide was changed. In Fig. 1, the black diamond (◆) indicates the diffraction pattern of Fe₂O₃, the black circle (●) indicates the diffraction pattern of the spinel structure MnFe₂O₄, and the white circle (○) indicates the diffraction pattern of Mn₂O₃.

It is seen from Table 1 and Fig. 1 that when the molar ratio of Mn:Fe in the composite oxide is 0.2:0.8 (Example 1), the composite oxide mainly contains an Fe₂O₃ crystal phase and, albeit slightly, exhibits the diffraction peak of the spinel structure MnFe₂O₄. Accordingly, the composite oxide of Example 1 is considered to consist of a crystal phase of Fe₂O₃ and a small amount of a crystal phase of the pinel structure MnFe₂O₄.

In addition, it is seen from Table 1 and Fig. 1 that when the molar ratio of Mn:Fe in the composite oxide is 0.4:0.6 (Example 2) or 0.5:0.5 (Example 3), the composite oxide mainly contains a crystal phase of the spinel structure MnFe₂O₄.

Furthermore, it is seen from Table 1 and Fig. 1 that when the molar ratio of Mn:Fe in the composite oxide is 0.8:0.2 (Comparative Example 1) or 1.0:0.0 (Comparative Example 2), the composite oxide mainly contains a crystal phase of Mn₂O₃.

### <Evaluation of Activity>

The activity of the catalyst was evaluated using a catalytic activity evaluation device (manufactured by Best Instruments Co., Ltd.). The evaluation was performed by putting a test gas into contact with each of the composite oxides above while continuously raising the temperature at a rate of 20°C/min starting from 50°C.

The composition of the test gas was set to contain NH₃: 500 ppm, NO: 500 ppm, H₂O: 5%, O₂: 10%, and N₂: 84.9%. The volume of each composite oxide used for the evaluation activity was set uniformly to 5 cc, and the space velocity (SV) at the time of evaluation was set to 180,000 h⁻¹. Here, the space velocity means a value obtained by dividing the flow rate (cc/h) of the test gas by the volume (cc) of the composite oxide.

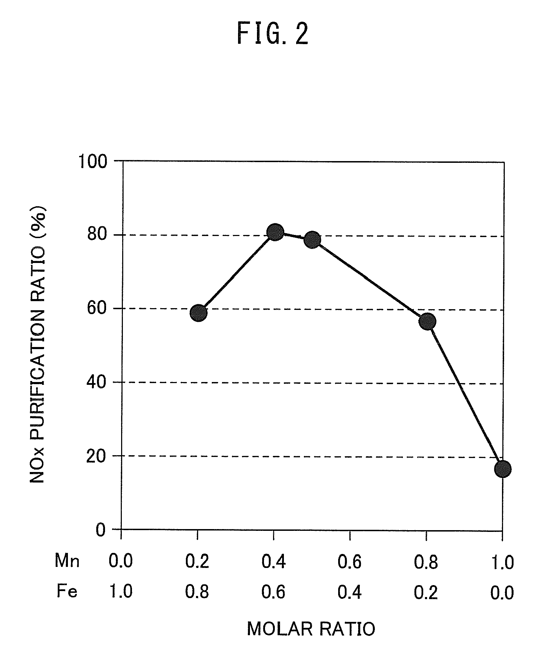

Fig. 2 shows the results of the evaluation of activity. Fig. 2 is a view showing the relationship between the molar ratio of Mn:Fe in the composite oxide and the NOx purification ratio (%) at 150°C.

It is seen from Fig. 2 that as the molar ratio of Mn:Fe in the composite oxide approaches about 0.33:0.67 corresponding to the chemical equivalent of MnFe₂O₄, the NOx purification ratio (%) of the composite oxide increases.

Furthermore, it is seen from Fig. 2 that the NOx purification ratio (%) when the molar ratio of Mn:Fe in the composite oxide is 0.4:0.6 (Example 2) or 0.5:0.5 (Example 3) is larger than the NOx purification ratio (%) when the molar ratio of Mn:Fe in the composite oxide is 0.8:0.2 (Comparative Example 1) or 1.0:0.0 (Comparative Example 2).

This is considered to be attributable to the fact that the composite oxide having a spinel structure MnFe₂O₄ (Examples 2 and 3) is more excellent in the NOx adsorption capacity and more enhanced in the selective catalytic reduction activity, than the composite oxide not having a spinel structure MnFe₂O₄ (Comparative Examples 1 and 2).

When the composite oxides of Example 1 and Comparative Example 1 are compared, the NOx purification ratio (%) of the composite oxide of Example 1 is slightly higher. This is considered to result because a crystal phase of the pinel structure MnFe₂O₄ is present in part of the composite oxide of Example 1 and this crystal phase has excellent NOx adsorption capacity and enhances the selective catalytic reduction activity.

## Claims

1. An exhaust gas purifying catalyst for selective reduction of NOx, containing a spinel-type composite oxide phase represented by formula MnFe₂O₄.

2. An exhaust gas purifying method, comprising bringing an ammonia and an exhaust gas containing NOx into contact with the exhaust gas purifying catalyst according to claim 1 to selectively reduce and purify the NOx.
